# EUROPÄISCHE PATENTSCHRIFT

(11) **EP 3 558 737 B1**
(45) Veröffentlichungstag und Bekanntmachung des Hinweises auf die Patenterteilung: **17.02.2021**
(21) Anmeldenummer: 17825737.4
(22) Anmeldetag: 12.12.2017
(51) Int. Cl.: B60K 6/36, B60K 6/383, B60K 6/547, B60K 6/48, F16H 3/00

(54) **ANTRIEBSANORDNUNG UND KRAFTFAHRZEUG**
DRIVE ARRANGEMENT AND MOTOR VEHICLE
SYSTÈME DE PROPULSION ET VÉHICULE AUTOMOBILE

(30) Priorität: 21.12.2016 DE 102016125071
(43) Veröffentlichungstag der Anmeldung: 30.10.2019
(73) Patentinhaber: Schaeffler Technologies AG & Co. KG, 91074 Herzogenaurach (DE)
(72) Erfinder: REITZ, Dierk, 76534 Baden-Baden (DE)
(86) Internationale Anmeldenummer: PCT/DE2017/101056
(87) Internationale Veröffentlichungsnummer: WO 2018/113832

(56) Entgegenhaltungen:
- WO-A1-2014/166745
- WO-A1-2017/220547

## Beschreibung

Die Erfindung betrifft eine Antriebsanordnung für ein Kraftfahrzeug sowie das Kraftfahrzeug selbst.

Im Zuge der Notwendigkeit, die Umweltverträglichkeit von Fahrzeugen zu verbessern, bestehen unterschiedliche Ansätze der zumindest teilweisen Elektrifizierung von Fahrzeugen.
Einer dieser Ansätze besteht in dem sogenannten Plug-In-Hybrid, welches ein Kraftfahrzeug mit elektromotorischem sowie verbrennungstechnischem Antrieb ist, dessen Akkumulator sowohl über den Verbrennungsmotor als auch am Stromnetz geladen werden kann.
Ein nahezu optimales Verhältnis zwischen Energieverbrauch, kostengünstiger Fertigung, Bauraumbedarf, Schaltkomfort sowie Lebensdauer stellt dabei das Hybridmodul VW DQ400 der Volkswagen AG dar.
In der DE 10 2009 038 344 A1 ist ein Antriebsstrangmodul für ein Kraftfahrzeug dargestellt, welches eine elektrische Antriebsmaschine, eine Verbrennungskraftmaschine sowie ein mehrere Gänge aufweisendes Schaltgetriebe und eine Doppelkupplung sowie eine Trennkupplung aufweist. Die als Rotorkupplung ausgeführte Trennkupplung dient der Übertragung eines Drehmomentes von einer Moduleingangswelle auf die Doppelkupplung.
Gegenüber einem solchen Hybridmodul wird jedoch eine weitere Reduktion hinsichtlich der Fertigungskosten angestrebt.

Bezüglich weiteren Standes der Technik wird auf die WO 2014/166745 A1 verwiesen.

Der Erfindung liegt daher die Aufgabe zugrunde, eine Antriebsanordnung für ein Kraftfahrzeug zur Verfügung zu stellen, die einen geringen Energieverbrauch und Bauraumbedarf mit einem hohen Schaltkomfort sowie einer langen Lebensdauer bei kostengünstiger Fertigung verbindet.

Diese Aufgabe wird durch die erfindungsgemäße Antriebsanordnung nach Anspruch 1 gelöst. Vorteilhafte Ausgestaltungsformen diese Antriebsanordnung sind in den Unteransprüchen 2-7 angegeben. Ergänzend wird ein Kraftfahrzeug mit der erfindungsgemäßen Antriebsanordnung nach Anspruch 8 zur Verfügung gestellt.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Erfindung betrifft eine Antriebsanordnung für ein Kraftfahrzeug, umfassend eine elektrische Antriebsmaschine, eine Verbrennungskraftmaschine sowie ein mehrere Gänge aufweisendes Schaltgetriebe und eine Mehrfachkupplung, insbesondere eine Doppelkupplung. Ein erstes Getriebeelement des Schaltgetriebes, insbesondere ein erstes Zahnrad oder ein erstes Zahnradpaar, ist drehmomentfest mit einem ersten Rotationsteil der Mehrfachkupplung gekoppelt, und ein zweites Getriebeelement des Schaltgetriebes, insbesondere ein zweites Zahnrad oder ein zweites Zahnradpaar, ist drehmomentfest mit einem zweiten Rotationsteil der Mehrfachkupplung gekoppelt. Ein Rotor der elektrischen Antriebsmaschine ist drehmomentfest mit einem dritten Rotationsteil der Mehrfachkupplung gekoppelt. Die Verbrennungskraftmaschine ist drehmomentfest mit einem dritten Getriebeelement, insbesondere einem dritten Zahnrad, des Schaltgetriebes gekoppelt.
Ein jeweiliges Getriebeelement bzw. Zahnrad bildet zusammen mit einem weiteren Zahnrad eine Übersetzungsstufe und somit einen Gang des Schaltgetriebes aus. Das jeweilige Getriebeelement kann dabei auch zwei rotationsfest miteinander gekoppelte Zahnräder und somit ein Zahnradpaar aufweisen, die jeweils bei Kämmung mit weiteren Zahnrädern eine Übersetzungsstufe ausbilden.
Dadurch, dass die Verbrennungskraftmaschine direkt und vorzugweise ohne Zwischenschaltung einer Trennkupplung an das Schaltgetriebe über eine Übersetzungsstufe angeschlossen ist, können die Verbrennungskraftmaschine sowie die elektrische Antriebsmaschine für unterschiedliche Drehzahl- bzw.

Drehmomentbereiche ausgelegt sein, so dass sich eine Minimierung des für den Antriebsstrang benötigten Bauraumes realisieren lässt.
Die Erfindung ist jedoch nicht zwingend ohne eine Trennkupplung zwischen der Verbrennungskraftmaschine und dem Schaltgetriebe auszuführen.
Die Erfindung stellt somit ein sogenanntes integriertes Hybridgetriebe dar, wobei das Schaltgetriebe vorzugsweise ein automatisiertes Getriebe ist und die Mehrfachkupplung als eine nasse Doppelkupplung ausgeführt ist. Es bietet sich hier an, dass die elektrische Antriebsmaschine der Hauptantrieb ist, und die Verbrennungskraftmaschine ein wahlweise zuschaltbarer Nebenantrieb ist.

Es ist vorzugsweise vorgesehen, dass das dritte Getriebeelement, mit welchem die Verbrennungskraftmaschine gekoppelt ist, ein Zahnrad zur Realisierung der Übersetzung des 4. Ganges des Schaltgetriebes ist.
Durch diese mechanische Kopplung der Verbrennungskraftmaschine über eine Verzahnung, insbesondere über eine Stirnradverzahnung, mit dem Schaltgetriebe, lässt sich das von der Verbrennungskraftmaschine eingetragene Drehmoment sowie die Drehzahl bereichsweise durch die gewählte Übersetzung zwischen Verbrennungskraftmaschine und dem Getriebeelement des Schaltgetriebes bestimmen.
In dieser Ausgestaltung bietet es sich an, dass das als drittes Getriebeelement dienende Zahnrad das Antriebsrad der Übersetzung des 4. Ganges des Schaltgetriebes ist.
Weiterhin kann die Kopplung der Verbrennungskraftmaschine mit dem dritten Getriebeelement über einen Freilauf, eine schaltbare Schiebemuffe, oder ein Differentialgetriebe realisiert sein.
Der Start der Verbrennungskraftmaschine erfolgt im Falle einer Anbindung über einen Freilauf durch einen Zusatzstarter, bzw. im Falle einer Anbindung über eine Schiebemuffe über die mit Schlupf betriebene zweite Trennkupplung der Doppelkupplung.
Um dies auch bei durch die elektrische Maschine realisierter maximaler Geschwindigkeit ausführen zu können, ist der der die maximale Geschwindigkeit realisierende Gang ein ungerader Gang.

Weiterhin ist die erfindungsgemäße Antriebsanordnung dann vorteilhaft ausgestaltet, wenn das erste Rotationsteil eine erste Kupplungsscheibe der Mehrfachkupplung ist, und das zweite Rotationsteil eine zweite Kupplungsscheibe der Mehrfachkupplung ist.

Das dritte Rotationsteil sollte dann ein Kupplungsgehäuse der Mehrfachkupplung sein. Die Kupplungsscheiben sind bei geöffneter Kupplung relativ zum Kupplungsgehäuse drehbar und bei geschlossener Kupplung rotatorisch in Bezug zueinander fixiert, so dass zwischen ihnen bei geschlossener Teilkupplung ein Drehmoment übertragbar ist. Derart kann schaltbar Drehmoment zwischen den Kupplungsscheiben und dem Kupplungsgehäuse bzw. den daran angeschlossenen Elementen des Antriebsstranges übertragen werden.

Weiterhin ist in einer vorteilhaften Ausgestaltung vorgesehen, dass die Mehrfachkupplung zumindest bereichsweise und vorzugsweise vollständig im vom Rotor der elektrischen Antriebsmaschine umschlossenen Raum angeordnet ist. Dies gewährleistet eine weitere Verringerung des benötigten Bauraumes, insbesondere da erfindungsgemäß auf eine Trennkupplung zwischen der Verbrennungskraftmaschine und dem Schaltgetriebe verzichtet werden kann.

Zudem kann das Schaltgetriebe ein Planetenradgetriebe umfassen, welches insbesondere ein Planetenradgetriebe mit schaltbaren Hohlrad sein kann, wobei das Planetenradgetriebe zur Realisierung einer weiteren Übersetzung zwischen Getriebeelementen angeordnet ist. Das schaltbare Hohlrad dient hier insbesondere der Spreizung der durch das Planetenradgetriebe realisierbaren Übersetzung.

Weiterhin ist vorteilhafterweise vorgesehen, dass das Schaltgetriebe ein Doppelkupplungsgetriebe ist und die Mehrfachkupplung eine Doppelkupplung ist, wobei eine erste Antriebswelle des Doppelkupplungsgetriebes mit dem ersten Rotationsteil der Doppelkupplung rotatorisch gekoppelt ist, und eine zweite Antriebswelle des Doppelkupplungsgetriebes mit dem zweiten Rotationsteil der Doppelkupplung rotatorisch gekoppelt ist. Eine derartige rotatorische Kopplung ist hier vorzugsweise derart vorgesehen, dass das jeweilige Rotationsteil bzw.

Kupplungsscheibe über wenigstens eine Übersetzungsstufe des Getriebes mit der jeweiligen Antriebswelle verbunden ist.
Gegenüber herkömmlichen Antriebsanordnungen ist die erfindungsgemäße Antriebsanordnung derart ausgestaltet, dass die üblicherweise vorgesehene motorseitige Trennkupplung K0 entfällt. Dabei kann die elektrische Maschine als ein sehr hoch drehendes Aggregat ausgelegt werden, was sich vorteilhaft auf den Fahrkomfort sowie die Herstellungskosten auswirkt. Entsprechend kann auch das Schaltgetriebe auf hohe Drehzahlen und relativ geringe anliegende Drehmomente ausgelegt werden, sodass auch das Schaltgetriebe kostengünstig zur Verfügung gestellt werden kann.
Es lassen sich alle Hybridfunktionen realisieren. Ein mit der Antriebsanordnung ausgestattetes Fahrzeug kann in allen Gängen des Schaltgetriebes sowohl verbrennungsmotorisch als auch elektrisch gefahren werden, wobei alle Gänge lastschaltend geschaltet werden können.

Ergänzend wird weiterhin ein Kraftfahrzeug zur Verfügung gestellt, welches eine erfindungsgemäße Antriebsanordnung und zumindest ein Antriebsrad, welches mittels der Antriebsanordnung antreibbar ist, aufweist. Vorzugsweise ist die erfindungsgemäße Antriebsanordnung in einem frontgetriebenen Personenkraftwagen angeordnet.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Fig. 1:: eine herkömmliche Antriebsanordnung mit elektrischer Antriebsmaschine und ohne Verbrennungskraftmaschine,
- Fig. 2:: eine erfindungsgemäße Antriebsanordnung mit angeschlossener Verbrennungskraftmaschine mit Darstellung des Drehmoment-Pfades im 1. Gang,
- Fig. 3:: eine erfindungsgemäße Antriebsanordnung mit angeschlossener Verbrennungskraftmaschine mit Darstellung des Schaltvorganges vom 2. zum 3. Gang,
- Fig. 4:: eine erfindungsgemäße Antriebsanordnung mit angeschlossener Verbrennungskraftmaschine mit Darstellung des Startvorganges der Verbrennungskraftmaschine,
- Fig. 5:: eine weitere Ausführungsform einer erfindungsgemäßen Antriebsanordnung mit angeschlossener Verbrennungskraftmaschine mit Differenzialgetriebe,
- Fig. 6:: eine weitere Ausführungsform einer erfindungsgemäßen Antriebsanordnung mit angeschlossener Verbrennungskraftmaschine mit Planetenradgetriebe.

In der hier vorgeschlagenen Antriebsanordnung kann durch die mechanische Anbindung der Verbrennungskraftmaschine über ein Getriebeelement ein entsprechendes optimales Übersetzungsverhältnis realisiert sein. Die von der elektrischen Maschine sowie der Verbrennungskraftmaschine realisierten Drehzahlen können unabhängig voneinander eingestellt werden. Es wird keine extra Trennkupplung zur Ankopplung der Verbrennungskraftmaschine benötigt, wodurch der produktionstechnische Aufwand gemindert ist sowie zusätzlich Bauraum zur Verfügung gestellt werden kann.

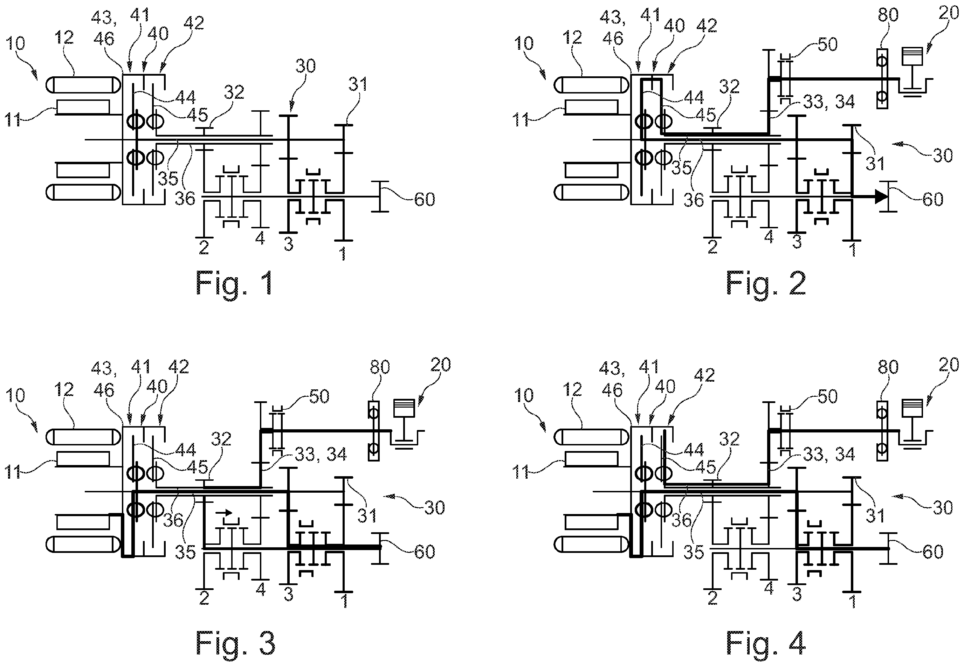

Zunächst wird der grundsätzliche Aufbau einer erfindungsgemäßen Antriebsanordnung anhand der Figuren 1 und 2 erläutert. Figur 1 zeigt eine Antriebsanordnung mit angeschlossener elektrischer Antriebsmaschine 10, an die noch keine Verbrennungskraftmaschine angeschlossen ist. Diese Antriebsanordnung umfasst neben der elektrischen Antriebsmaschine 10 ein Schaltgetriebe 30 sowie eine hier als Doppelkupplung ausgeführte Mehrfachkupplung 40. Das von der elektrischen Antriebsmaschine 10 erzeugte Drehmoment wird über die Mehrfachkupplung 40 und das Schaltgetriebe 30 auf den Abtrieb 60 geleitet.

Das Schaltgetriebe 30 weist mehrere Übersetzungsstufen zur Realisierung der Gänge 1-4 auf. Dabei sind Zahnräder der Gänge 1 und 3 als erste Getriebeelemente 31 mit einer ersten Antriebswelle 35 gekoppelt, und die Zahnräder der Gänge 2 und 4 sind als zweite Getriebeelemente 32 mit einer zweiten Antriebswelle 36 gekoppelt.
Die erste Antriebswelle 35 ist mit einem ersten Rotationsteil 44 der Mehrfachkupplung 40 durch einen Kupplungsprozess drehmomentfest verbunden, und die zweite Antriebswelle 36 ist mit einem zweiten Rotationsteil 45 der Mehrfachkupplung 40 durch einen Kupplungsprozess drehmomentfest verbunden. Das erste Rotationsteil 44 ist dabei die Kupplungsscheibe der ersten Teilkupplung 41, und das zweite Rotationsteils 45 ist die Kupplungsscheibe der zweiten Teilkupplung 42 der Mehrfachkupplung 40.
Diese Kupplungsscheiben sind relativ zu dem Kupplungsgehäuse 43 der Mehrfachkupplung 40 drehbar. Das Kupplungsgehäuse 43 bildet ein drittes Rotationsteil 46 der Mehrfachkupplung 40 aus, welches fest mit dem Rotor 11 der elektrischen Antriebsmaschine 10 verbunden ist.
Bei Rotation des Rotors 11 in Bezug zum Stator 12 der elektrischen Antriebsmaschine 10 kann somit durch Schließung der Teilkupplungen 41,42 der Pfad des übertragenen Drehmomentes durch das Schaltgetriebe 30 bestimmt werden, nämlich entweder über die Übersetzungen des 1. oder 3. Ganges, oder über die Übersetzungen des 2. und 4. Ganges.

Figur 2 zeigt die in Figur 1 dargestellte Ausführungsform einer Antriebsanordnung mit daran gekoppelter Verbrennungskraftmaschine 20. Die Verbrennungskraftmaschine 20 ist über ein Fliehkraftpendel 80 an das Schaltgetriebe 30 angeschlossen. Dabei ist zwischen der Verbrennungskraftmaschine 20 und dem Schaltgetriebe 30 keine weitere Trennkupplung angeordnet, sondern die Verbrennungskraftmaschine 20 ist über ein drittes Getriebeelement 33, welches hier auch das Antriebsrad der Übersetzung des 4. Ganges des Schaltgetriebes 30 ist, an dieses angeschlossen.
Durch die Wahl des Übersetzungsverhältnisses der mit diesem dritten Getriebeelement 33 realisierten Übersetzung bestehen weitreichenden Möglichkeiten zur Anwendung unterschiedlich leistungsfähiger Verbrennungskraftmaschinen. So ist es unter anderem möglich, relativ hoch drehende und einen geringen Bauraum beanspruchende Verbrennungskraftmaschinen 20 anzuordnen.
Figur 2 zeigt des Weiteren den Drehmoment-Pfad beim Betrieb der Antriebsanordnung mittels der Verbrennungskraftmaschine 20. Es ist ersichtlich, dass dabei das von der Verbrennungskraftmaschine 20 zur Verfügung gestellte Drehmoment über das Antriebsrad 34 der Übersetzung für den 4. Gang des Schaltgetriebes 30 in das Schaltgetriebe 30 eingetragen wird und über die zweite Antriebswelle 36 auf die zweite Teilkupplung 42, von dieser auf das Kupplungsgehäuse 43 und von diesem auf die erste Teilkupplung 41 geleitet wird. Von der ersten Teilkupplung 41 wird das Drehmoment in die erste Antriebswelle 35 geleitet und von dort über die Übersetzung des 1. Ganges dem Abtrieb 60 zur Verfügung gestellt.

Die Figuren 3 und 4 zeigen dieselbe Antriebsanordnung wie Figur 2, jedoch mit unterschiedlichen Funktionen. Figur 3 zeigt dabei den Ablauf des Schaltvorganges vom 2. zum 3. Gang. Es ist ersichtlich, dass das von der Verbrennungskraftmaschine 20 zur Verfügung gestellte Drehmoment zunächst über das Übersetzungsverhältnis des 4. Ganges und von dort über die zweite Antriebswelle 36 dem Abtrieb 60 zugeleitet wird. Durch eine Betätigung der ersten Teilkupplung 41 sowie durch den Betrieb der elektrischen Antriebsmaschine 10 wird vom Rotor 11 ein Drehmoment über die erste Teilkupplung 41 in die erste Antriebswelle 35 eingetragen und von dieser über die Übersetzungsstufe des 3. Ganges dem Abtrieb 60 zugeleitet. In diesem Zustand erfolgt somit ein elektromotorischer Antrieb, so dass die Verbrennungskraftmaschine 20 nicht betrieben werden muss.
Die Schaltungen zwischen den Gängen erfolgt immer als Lastschaltung der elektrischen Antriebsmaschine 10; die Verbrennungskraftmaschine 20 wird vor der Schaltung abgekoppelt bzw. erst nach der Lastschaltung wieder angekoppelt.

Zum Neustart der Verbrennungskraftmaschine 20 aus dem beschriebenen 3. Gang kann wie aus Figur 4 ersichtlich vorgegangen werden. Es wird dabei die zweite Teilkupplung 42 geschlossen, so dass Drehmoment auf die zweite Antriebswelle 36 übertragen wird und von dort über das Antriebsrad 34 der Verbrennungskraftmaschine 20 zugeleitet wird, sodass diese gestartet werden kann.

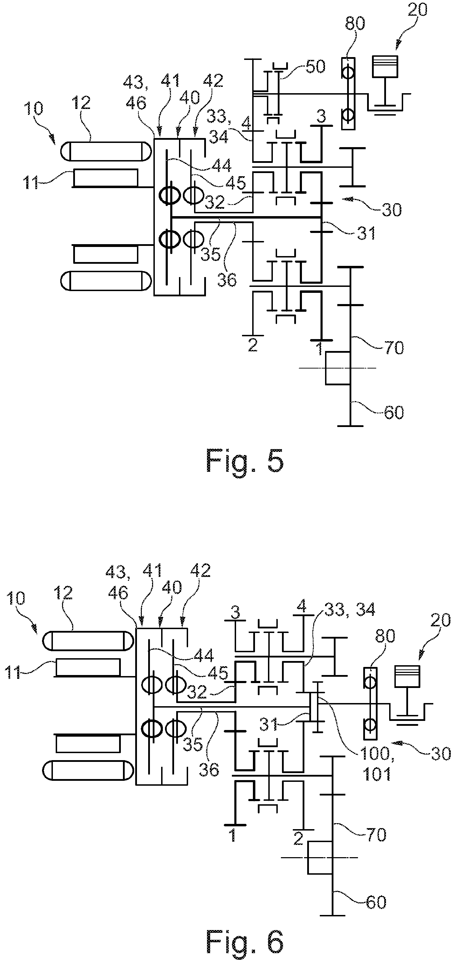

Die Figuren 5 und 6 zeigen Ausgestaltungen der erfindungsgemäßen Antriebsanordnung, bei denen das Schaltgetriebe 30 mit einem Differenzialgetriebe 70 gekoppelt ist. Des Weiteren ist ersichtlich, dass die Verbrennungskraftmaschine 20 in der in Figur 5 dargestellten Ausführungsform der Antriebsanordnung über einen Freilauf 50 an das Schaltgetriebe 30 angeschlossen ist. In der in Figur 6 dargestellten Ausführungsform ist der Anschluss der Verbrennungskraftmaschine 20 an das Schaltgetriebe 30 über ein Planetenradgetriebe 100 realisiert, welches vorzugsweise ein schaltbares Hohlrad 101 zur Einstellung der Drehmomentverhältnisse aufweist.

Durch die mechanische Anbindung der Verbrennungskraftmaschine über ein Getriebeelement kann ein entsprechendes optimales Übersetzungsverhältnis realisiert sein. Die von der elektrischen Maschine sowie der Verbrennungskraftmaschine realisierten Drehzahlen können unabhängig voneinander eingestellt werden. Es wird keine extra Trennkupplung zur Ankopplung der Verbrennungskraftmaschine benötigt, wodurch der produktionstechnische Aufwand gemindert ist sowie zusätzlich Bauraum zur Verfügung gestellt werden kann.

### Bezugszeichenliste

- 1: Erster Gang
- 2: Zweiter Gang
- 3: Dritter Gang
- 4: Vierter Gang
- 10: elektrische Antriebsmaschine
- 11: Rotor
- 12: Stator
- 20: Verbrennungskraftmaschine
- 30: Schaltgetriebe
- 31: erstes Getriebeelement
- 32: zweites Getriebeelement
- 33: drittes Getriebeelement
- 34: Antriebsrad
- 35: erste Abtriebswelle
- 36: zweite Abtriebswelle
- 40: Mehrfachkupplung
- 41: Erste Teilkupplung
- 42: Zweite Teilkupplung
- 43: Kupplungsgehäuse
- 44: erstes Rotationsteil
- 45: zweites Rotationsteil
- 46: drittes Rotationsteil
- 50: Freilauf
- 60: Abtrieb
- 70: Differentialgetriebe
- 80: Fliehkraftpendel
- 100: Planetenradgetriebe
- 101: Schaltbares Hohlrad

## Patentansprüche

1. Antriebsanordnung für ein Kraftfahrzeug, umfassend eine elektrische Antriebsmaschine (10), eine Verbrennungskraftmaschine sowie ein mehrere Gänge aufweisendes Schaltgetriebe (30) und eine Mehrfachkupplung (40), insbesondere eine Doppelkupplung, wobei ein erstes Getriebeelement (31) des Schaltgetriebes, insbesondere ein erstes Zahnrad oder ein erstes Zahnradpaar, drehmomentfest mit einem ersten Rotationsteil (44) der Mehrfachkupplung (40) gekoppelt ist und ein zweites Getriebeelement (32) des Schaltgetriebes (30), insbesondere ein zweites Zahnrad oder ein zweites Zahnradpaar, drehmomentfest mit einem zweiten Rotationsteil (45) der Mehrfachkupplung (40) gekoppelt ist, und ein Rotor (11) der elektrischen Antriebsmaschine (10) drehmomentfest mit einem dritten Rotationsteil (46) der Mehrfachkupplung (40) gekoppelt ist,
**dadurch gekennzeichnet, dass** die Verbrennungskraftmaschine mit einem dritten Getriebeelement (33) des Schaltgetriebes (30) über einen Freilauf (50) oder eine schaltbare Schiebemuffe gekoppelt ist, wobei das dritte Getriebeelement (33), mit welchem die Verbrennungskraftmaschine gekoppelt ist, ein Zahnrad zur Realisierung der Übersetzung des 4. Ganges des Schaltgetriebes (30) ist.

2. Antriebsanordnung nach Anspruch 1, **dadurch gekennzeichnet, dass** das als drittes Getriebeelement (33) dienende Zahnrad das Antriebsrad der Übersetzung des 4. Ganges des Schaltgetriebes (30) ist.

3. Antriebsanordnung nach einem der vorhergehenden Ansprüche, **dadurch gekennzeichnet, dass** das erste Rotationsteil (44) eine erste Kupplungsscheibe der Mehrfachkupplung (40) ist, und das zweite Rotationsteil (45) eine zweite Kupplungsscheibe der Mehrfachkupplung (40) ist.

4. Antriebsanordnung nach einem der vorhergehenden Ansprüche, **dadurch gekennzeichnet, dass** das dritte Rotationsteil (46) ein Kupplungsgehäuse (43) der Mehrfachkupplung (40) ist.

5. Antriebsanordnung nach einem der vorhergehenden Ansprüche, **dadurch gekennzeichnet, dass** die Mehrfachkupplung (40) zumindest bereichsweise und vorzugsweise vollständig im vom Rotor (11) der elektrischen Antriebsmaschine (10) umschlossenen Raum angeordnet ist.

6. Antriebsanordnung nach einem der vorhergehenden Ansprüche, **dadurch gekennzeichnet, dass** das Schaltgetriebe (30) ein Planetenradgetriebe (100) umfasst, insbesondere ein Planetenradgetriebe (100) mit schaltbaren Hohlrad (101), wobei das Planetenradgetriebe (100) zur Realisierung einer weiteren Übersetzung zwischen Getriebeelementen angeordnet ist.

7. Antriebsanordnung nach einem der vorhergehenden Ansprüche, **dadurch gekennzeichnet, dass** das Schaltgetriebe (30) ein Doppelkupplungsgetriebe ist und die Mehrfachkupplung (40) eine Doppelkupplung ist, wobei eine erste Antriebswelle (35) des Doppelkupplungsgetriebes mit dem ersten Rotationsteil (44) der Doppelkupplung rotatorisch gekoppelt ist, und eine zweite Antriebswelle (36) des Doppelkupplungsgetriebes mit dem zweiten Rotationsteil (45) der Doppelkupplung rotatorisch gekoppelt ist.

8. Kraftfahrzeug, aufweisend eine Antriebsanordnung nach einem der Ansprüche 1 bis 7 und zumindest ein Antriebsrad, welches mittels der Antriebsanordnung antreibbar ist.

## Claims

1. A drive arrangement for a motor vehicle, comprising an electric drive machine (10), an internal combustion engine as well as a manual transmission (30) having a plurality of gears and a multiple clutch (40), in particular a double clutch, wherein a first transmission element (31) of the manual transmission, in particular a first gearwheel or a first gearwheel pair, is coupled fixedly in terms of torque to a first rotational part (44) of the multiple clutch (40) and a second transmission element (32) of the manual transmission (30), in particular a second gearwheel or a second gearwheel pair is coupled fixedly in terms of torque to a second rotational part (45) of the multiple clutch (40), and a rotor (11) of the electric drive machine (10) is coupled fixedly in terms of torque to a third rotational part (46) of the multiple clutch (40),
**characterised in that** the internal combustion engine is coupled to a third transmission element (33) of the manual transmission (30) via a freewheel (50) or a shiftable sliding sleeve, wherein the third transmission element (33), to which the internal combustion engine is coupled, is a gearwheel for producing the transmission ratio of the 4th gear of the manual transmission (30).

2. The drive arrangement according to claim 1, **characterised in that** the gearwheel serving as the third transmission element (33) is the drive wheel for the transmission ratio of the 4th gear of the manual transmission (30).

3. The drive arrangement according to any one of the preceding claims, **characterised in that** the first rotational part (44) is a first clutch disc of the multiple clutch (40), and the second rotational part (45) is a second clutch disc of the multiple clutch (40).

4. The drive arrangement according to any one of the preceding claims, **characterised in that** the third rotational part (46) is a coupling housing (43) of the multiple clutch (40).

5. The drive arrangement according to any one of the preceding claims, **characterised in that** the multiple clutch (40) is arranged at least in some areas and preferably completely in the space enclosed by the rotor (11) of the electric drive machine (10).

6. The drive arrangement according to any one of the preceding claims, **characterised in that** the manual transmission (30) comprises a planetary gear (100), in particular a planetary gear (100) with a switchable ring gear (101), wherein the planetary gear (100) is arranged between transmission elements to produce a further transmission ratio.

7. The drive arrangement according to any one of the preceding claims, **characterised in that** the manual transmission (30) is a double clutch transmission and the multiple clutch (40) is a double clutch, wherein a first drive shaft (35) of the double clutch transmission is rotatably coupled to the first rotational part (44) of the double clutch, and a second drive shaft (36) of the double clutch transmission is rotatably coupled to the second rotational part (45) of the double clutch.

8. A motor vehicle, having a drive arrangement according to any one of claims 1 to 7 and at least one drive wheel which is drivable by means of the drive arrangement.

## Revendications

1. Système de propulsion pour un véhicule automobile, comprenant un moteur de propulsion électrique (10), un moteur à combustion interne ainsi qu'une boîte de vitesses (30) possédant plusieurs rapports et un embrayage multiple (40), en particulier un double embrayage, un premier élément de boîte de vitesses (31) de la boîte de vitesses, en particulier une première roue dentée ou une première paire de roues dentées, étant accouplé en couple solidaire avec une première partie rotative (44) de l'embrayage multiple (40) et un deuxième élément de boîte de vitesses (32) de la boîte de vitesses (30), en particulier une deuxième roue dentée ou une deuxième paire de roues dentées, étant accouplé en couple solidaire avec une deuxième partie rotative (45) de l'embrayage multiple (40) et un rotor (11) du moteur de propulsion électrique (10) étant accouplé en couple solidaire avec une troisième partie rotative (46) de l'embrayage multiple (40),
**caractérisé en ce que** le moteur à combustion interne est accouplé à un troisième élément de boîte de vitesses (33) de la boîte de vitesses (30) par l'intermédiaire d'une roue libre (50) ou d'un manchon coulissant commutable, le troisième élément de boîte de vitesses (33), auquel le moteur à combustion interne est accouplé, étant une roue dentée pour la mise en œuvre d'un rapport de transmission du 4^{ème} rapport de la boîte de vitesses (30).

2. Système de propulsion selon la revendication 1, **caractérisé en ce que** la roue dentée servant de troisième élément de boîte de vitesses (33) est la roue motrice du rapport de transmission du 4^{ème} rapport de la boîte de vitesses (30).

3. Système de propulsion selon l'une quelconque des revendications précédentes, **caractérisé en ce que** la première partie rotative (44) est un premier disque d'embrayage de l'embrayage multiple (40) et la deuxième partie rotative (45) est un deuxième disque d'embrayage de l'embrayage multiple (40).

4. Système de propulsion selon l'une quelconque des revendications précédentes, **caractérisé en ce que** la troisième partie rotative (46) est un carter d'embrayage (43) de l'embrayage multiple (40).

5. Système de propulsion selon l'une quelconque des revendications précédentes, **caractérisé en ce que** l'embrayage multiple (40) est disposé au moins dans certaines zones et de préférence complètement dans l'espace entouré par le rotor (11) du moteur de propulsion électrique (10).

6. Système de propulsion selon l'une quelconque des revendications précédentes, **caractérisé en ce que** la boîte de vitesses (30) comprend un engrenage planétaire (100), en particulier un engrenage planétaire (100) avec une couronne commutable (101), l'engrenage planétaire (100) étant disposé entre des éléments de boîte de vitesses pour obtenir un rapport de transmission supplémentaire.

7. Système de propulsion selon l'une quelconque des revendications précédentes, **caractérisé en ce que** la boîte de vitesses (30) est une boîte de vitesses à double embrayage et l'embrayage multiple (40) est un double embrayage, un premier arbre de propulsion (35) de la boîte de vitesses à double embrayage étant accouplé en rotation à la première partie rotative (44) du double embrayage et un second arbre de propulsion (36) de la boîte de vitesses à double embrayage étant accouplé en rotation à la deuxième partie rotative (45) du double embrayage.

8. Véhicule automobile, présentant un système de propulsion selon l'une des revendications 1 à 7 et au moins une roue de propulsion qui peut être entraînée au moyen du système de propulsion.
